# EUROPÄISCHE PATENTSCHRIFT

(11) **EP 0 544 202 B1**
(45) Veröffentlichungstag und Bekanntmachung des Hinweises auf die Patenterteilung: **08.02.1995**
(21) Anmeldenummer: 92119870.1
(22) Anmeldetag: 21.11.1992
(51) Int. Cl.: E01C 11/22, E01F 1/00, E01F 9/04

(54) **Bordstein und Haltestelle für Omnibusse od. dgl., insbesondere für kombinierten Bahn/Omnibus-Verkehr**
Kerbstone and stop for buses and the like, especially for combined tramway and bus traffic
Bordure et arrêt pour autobus ou similaires, notamment pour la circulation de tramway et autobus combiné

(30) Priorität: 26.11.1991 DE 9114667 U
(43) Veröffentlichungstag der Anmeldung: 02.06.1993
(73) Patentinhaber: Fröhlich Bauunternehmung AG, D-34587 Felsberg (DE)
(72) Erfinder: Beinhauer, Manfred, Dipl.-Ing., W-3500 Kassel (DE); Brandau, Reiner, Dipl.-Ing., W-3501 Edermünde 2 (DE); Stieglitz, Heinrich, Dipl.-Ing., W-3582 Felsberg (DE); Hasch, Wolfgang, Dipl.-Ing., W-3583 Wabern (DE)
(74) Vertreter: Freiherr von Schorlemer, Reinfried, Dipl.-Phys.

(56) Entgegenhaltungen:
- DE-A- 2 820 545
- DE-A- 3 437 272
- DE-U- 9 004 916
- US-A- 4 715 743

## Beschreibung

Die Erfindung betrifft eine Haltestelle und einen Bordstein nach den Oberbegriffen der Ansprüche 1 und 16.

Kombinierte Haltestellen für Straßenbahnen od. dgl. einerseits und Omnibusse od. dgl. andererseits erhalten im öffentlichen Personennahverkehr eine immer größere Bedeutung, da wegen des ständig steigenden Verkehrsaufkommens gewünscht wird, Bahnen und Busse durch die baugleichen Signalbeeinflussungssysteme gemeinsam auf eigens für sie errichteten Fahrbahnen oder Fahrbahnabschnitten bevorrechtigt verkehren zu lassen.

Eine wichtige Größe bei der Errichtung von Haltestellen ist die Einstiegshöhe, die als der Abstand der Schienenoberkante (Straßenbahn) oder Fahrbahn (Omnibus) von dem Niveau, das die Fahrgäste innerhalb der Bahn oder des Busses erreichen müssen, definiert ist. Diese Einstiegshöhe sollte im Interesse von älteren oder behinderten Personen, aber auch z.B. von Personen, die schwere Lasten, Kinderwagen od. dgl. mit sich führen, möglichst klein sein.

Bei herkömmlichen Straßenbahnen und Omnibussen führt der Ein- oder Ausstieg über mehrere Trittstufen. Daher ist der Ein- bzw. Ausstieg in der Regel unbequem, selbst wenn er durch Höherlegung der Haltestellen bzw. dadurch erleichtert würde, daß der Abstand der untersten Trittstufe vom Niveau der Haltestelle reduziert wird.

Dagegen besitzen moderne Niederflur-Straßenbahnen zumindest beim überwiegenden Teil ihrer Türen eine Einstiegshöhe, die in Abhängigkeit vom Verschleiß der Schiene und Räder und auch in Abhängigkeit von der Zahl der mitgeführten Paasagiere z.B. nur ca. 240 bis 300 mm beträgt. Ähnlich günstige Werte werden für Niederflur-Omnibusse erwartet, die in Kürze lieferbar sein werden. Im Gegensatz zu herkömmlichen Systemen würde daher eine Anhebung des Niveaus der Haltestellen auf die Höhe des Ein- und Austrittsniveaus der Niederflur-Straßenbahnen und -omnibusse einen nahezu flurgleichen Ein- und Ausstieg ermöglichen und damit eine wesentliche Vergrößerung des Fahrkomforts herbeiführen.

Der Schaffung von derart erhöhten Haltestellen steht jedoch bisher entgegen, daß ein entsprechend tiefer Ein- und Ausstiegsspalt entstehen würde, der zur Vermeidung von Verletzungsgefahren möglichst klein gehalten werden muß.

Soweit es sich um Straßenbahnen od. dgl. handelt, ergeben sich im Hinblick auf die Erzielung eines ausreichend kleinen Ein- und Ausstiegsspalts keine Probleme, da die Spaltgröße wegen der Spurführung durch die Schienen und der damit verbundenen Anfahrgenauigkeit allein durch das Maß Schienenkopfaußenkante zur Haltestellenoberkante festgelegt werden kann. Beim Anfahren einer kombinierten Bahn/Bus-Haltestelle oder auch einer allein für den Busbetrieb vorgesehenen Haltestelle mit einem Omnibus od. dgl. ergeben sich dagegen wegen der fehlenden Spurführung erhebliche Schwierigkeiten. In diesem Fall ist die Größe des genannten Spalts nämlich in beträchtlichem Umfang von den Fahrkünsten der Busfahrer und ggf. auch von örtlichen Gegebenheiten abhängig. Hinzu kommt, daß die Reifen, insbesondere die seitlich liegenden Reifenflanken eines Omnibusses, einem sehr starken Verschleiß unterliegen, wenn der Fahrer in dem Bemühen, den genannten Spalt möglichst klein zu halten, zu dicht an die Oberkante der Haltestellen heranfährt und dabei mit der Vorderseite des Bordsteins in Berührung kommt. Daher werden die meisten Fahrer unwillkürlich versuchen, einen ausreichend großen Abstand von der Haltestellenoberkante zu halten, und dadurch einen unerwünscht großen Ein- und Ausstiegsspalt herstellen.

Zur Vermeidung des Reifenverschleißes sind Bordsteine der eingangs bezeichneten Gattung bekannt (DE-A-28 20 545), die zur Begrenzung üblicher Fahrbahnen dienen und so ausgebildet sind, daß sie von den Flanken üblicher Fahrzeugreifen entweder überhaupt nicht oder nur so berührt werden, daß eine Beschädigung des Reifens ausgeschlossen ist. Bordsteine dieser Art sind allerdings für Haltestellen nicht ohne weiteres geeignet.

Daneben sind auch bereits Haltestellen der eingangs bezeichneten Gattung bekannt (DE-U-90 04 916), die von Bordsteinen begrenzt sind, die in ihren oberen Abschnitten Mittel zur Vermeidung von Beschädigungen aufweisen, die aufgrund von Nickbewegungen od. dgl. an den Karosserieteilen von Omnibussen entstehen können, wenn letztere zu nah an die Haltestelle herangefahren werden. Zu diesem Zweck weisen die Bordsteine je einen als Gummiaufsatz ausgebildeten, elastischen oberen Abschnitt und einen als Betonstein ausgebildeten, starten unteren Abschnitt auf. Dabei soll der elastische, an seiner Vorderseite leicht abgeschrägte Abschnitt zwangsläufig auftretende Berührungen zwischen den Bordsteinen und Karosserieteilen der Omnibusse weitgehend unschädlich machen. Außerdem sind an den Vorderseiten dieser bekannten Bordsteine Scheuerleisten vorgesehen, die aus Polyurethan od. dgl. bestehen und bei einem zu dichten Heranfahren der Omnibusse an die Haltestelle auch Beschädigungen der Reifenflanken vermeiden sollen. Bordsteine dieser Art sind allerdings nur mit hohem konstruktivem Aufwand herstellbar, teuer und wenig haltbar, so daß sie für Haltestellen mit hohem Verkehrsaufkommen praktisch ungeeignet sind.

Demgegenüber liegt der Erfindung die Aufgabe zugrunde, eine Haltestelle zu schaffen, die bei ebenfalls geringem Reifenverschleiß auf einfache Weise mit den erwünschten kleinen Ein- und Ausstiegsspalten angefahren werden kann. Außerdem sollen die Haltestellen so ausgebildet werden können, daß unterschiedliche Einstiegshöhen von Bahnen und Bussen weitgehend optimiert werden. Schließlich soll ein Bordstein geschaffen werden, der zur Abgrenzung der Fahrbahn im Bereich einer solchen Haltestelle geeignet, aber auf einfache Weise und daher preisgünstig herstellbar ist.

Zur Lösung dieser Aufgabe dienen die kennzeichnenden Merkmale der Ansprüche 1 und 16 sowie die Merkmale des Anspruchs 17.

Die Erfindung beruht auf der überraschenden Erkenntnis, daß die eingangs genannten Nachteile auf einfachste Weise mit einem erfindungsgemäß ausgebildeten Bordstein vermieden werden können. Bei dessen Anwendung ergeben sich, soweit Straßenbahnen od. dgl. betroffen sind, keine wesentlichen Änderungen gegenüber herkömmlichen Bordsteinen. Dagegen wird für Omnibusse od. dgl. der wesentliche Vorteil erzielt, daß ihre auf der Seite des Bordsteins befindlichen Räder beim Versuch des Fahrers, möglichst dicht an die Haltestellenkante heranzufahren, zumindest auf einen unteren Abschnitt und ggf. auch auf den gewölbten, vorzugsweise der üblichen Reilenform angepaßten Abschnitt der nach oben zurückweichenden Schrägfläche der erfindungsgemäßen Bordsteine auftreffen. Dabei entsteht einerseits zwischen den Reifenflanken und den Vorderseiten der Bordsteine allenfalls eine Linienberührung, aber keine schädliche Flächenberührung. Andererseits bemerkt der Fahrer aufgrund einer Rückwirkung der Schrägflächen auf die lenkbaren Vorderräder des Omnibusses od. dgl. sofort, daß zumindest das betreffende Vorderrad auf die Schrägfläche aufgelaufen ist und sich folglich der Fahrzeugkörper in einem vorgegebenen Abstand von der für den Ein- und Ausstiegsspalt maßgeblichen oberen Bordsteinkante befindet. Der Fahrer kann daher im Haltestellenbereich auch "nach Gefühl" so lenken, daß die betreffenden Räder nach dem Anhalten des Omnibusses od. dgl. im unteren, unkritischen Bereich der Schrägflächen angeordnet sind. Auf diese Weise kann allein durch geeignete Dimensionierung des Bordsteins sichergestellt werden, daß auch bei Omnibussen der gewünschte kleine Ein- und Ausstiegsspalt erhalten wird. Sollte der Fahrer vorübergehend und unbeabsichtigt zu nah an die obere Bordsteinkante heranfahren, werden die Räder auf die oberhalb der Wölbungen befindlichen, vergleichsweise steilen Abschnitte der Vorderseiten der Bordsteine gelangen und von diesen zurück auf die Fahrbahn gelenkt. Auch dabei sind Flächenberührungen zwischen den Bordsteinen und den Reilenflanken weitgehend ausgeschlossen. Im übrigen könnte die Dimensionierung des erfindungsgemäßen Bordsteins bei Bedarf an das Fabrikat des jeweils vorhandenen Bahn/Bus-Systems angepaßt werden, sofern es nicht in Kauf genommen werden kann, daß die Einstiegshöhen und/oder Ein- und Ausstiegsspalte von Fabrikat zu Fabrikat geringe Unterschiede aufweisen. Aufgrund der Ausbildung des Hilfsmittels als Bordstein ist es außerdem leicht möglich, geringe Unterschiede der Einstiegshöhen von Bahnen und Bussen dadurch auszugleichen, daß in der Fahrbahn von den Bordsteinen zu den Schienen hin ein entsprechend geringes Gefälle bzw. eine entsprechend geringe Steigung vorgesehen wird.

Weitere vorteilhafte Merkmale der Erfindung ergeben sich aus den Unteransprüchen.

Die Erfindung wird nachfolgend in Verbindung mit der beiliegenden Zeichnung an einer kombinierten Bahn-/Bus-Haltestelle näher erläutert. Es zeigen:
- Fig. 1: eine Draufsicht auf einen Teil einer erfindungsgemäßen Haltestelle;
- Fig. 2: einen Querschnitt durch eine zweite Ausführungsform einer erfindungsgemäßen Haltestelle;
- Fig. 3: einen vergrößerten Querschnitt durch einen erfindungsgemäßen Bordstein;
- Fig. 4: eine Draufsicht auf den Bordstein nach Fig. 2; und
- Fig. 5: eine vergrößerte Einzelheit der Fig. 2 in Verbindung mit einem Rad eines Omnibusses.

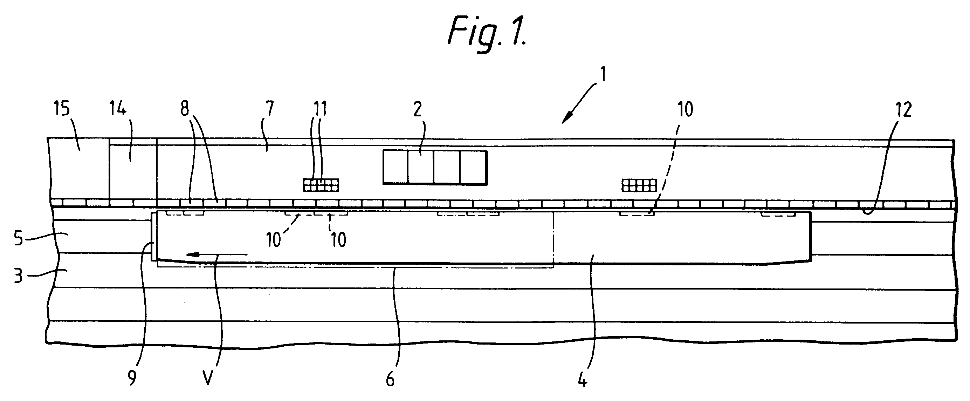

Nach Fig. 1 ist eine Haltestelle 1 mit einem Unterstand 2 neben einer Fahrbahn 3 vorgesehen, die parallel zur Haltestelle 1 angeordnet ist und wenigstens ein, von einer Straßenbahn 4 od. dgl. befahrenes, z.B. vollkommen in die Fahrbahn 3 versenktes Gleis 5 und eine übliche Fahrspur für einen nur gestrichelt angedeuteten Omnibus 6 umfaßt. Die Oberfläche 7 der Haltestelle 1 ist gegenüber der Fahrbahn 3 erhöht und zur Fahrbahn 3 hin mit hintereinander angeordneten, erfindungsgemäßen Bordsteinen 8 abgegrenzt, die weiter unten erläutert werden.

Quer zum Gleis 5 und in Fahrtrichtung (Pfeil v) am hinteren Ende der Haltestelle 1 ist eine Haltemarkierung 9, z.B. eine farbige Linie, auf der Fahrbahn 3 angebracht die dem Bahn- und/oder Busfahrer die genaue Stelle anzeigt, an der er sein Fahrzeug 4,6 anzuhalten hat.

Beim Halt des jeweiligen Fahrzeugs 4,6 an der Haltemarkierung 9 befinden sich seine Türen 10 in einem vom jeweiligen Fahrzeugtyp abhängigen Abstand von der Haltemarkierung 9. Erfindungsgemäß ist daher vorgesehen, die Oberfläche 7 an diesen Stellen mit besonderen Steinen oder Platten 11 auszubilden, deren Oberseiten mit einer weiteren Markierung, z.B. einer Riffelung od. dgl., versehen sind, die insbesondere von Blinden mit einem Stock od. dgl. ertastet werden kann. Dadurch wird es diesen wie auch den übrigen Fahrgästen ermöglicht, die Einfahrt des jeweiligen Fahrzeugs 4,6 in die Haltestelle 1 an den für das Einsteigen fest vorgegebenen Positionen zu erwarten bzw. die jeweiligen Türen problemlos aufzufinden. Zweckmäßig sind die Platten 11 unmittelbar hinter den Bordsteinen 8 und in einem festen Abstand von diesen angeordnet, damit daraus auch der Abstand von der Bordsteinkante 12 abgeschätzt werden kann. Haben die Türen 10 der Bahnen 4 oder Busse 6 unterschiedliche Abstände von der Haltemarkierung 9, wäre es auch möglich, die Steine oder Platten 11 mit entsprechend unterschiedlichen Markierungen zu versehen. Außerdem könnten die Steine und Platten 11 mit einer weiteren, z.B. mit einer Signalfarbe hergestellten Markierung oder einer durchgehenden Färbung versehen werden, damit die Einstiegszonen auch im Dunkeln erkennbar sind, insbesondere für sehbehinderte Personen. Haben nicht alle Türen 10 dieselbe Funktion, können schließlich die Steine oder Platten 11 Türen 10 mit einer ausgewählten Funktion zugeordnet sein. Bei Niederflursystemen sind dies z.B. solche Türen, die einen flurgleichen Ein- und Ausstieg ermöglichen.

Zum Verlassen der Haltestelle 1 dient eine Rampe 14, die z.B. zu einem mit der Fahrbahn 3 niveaugleichen Fußgängerübergang 15 führt.

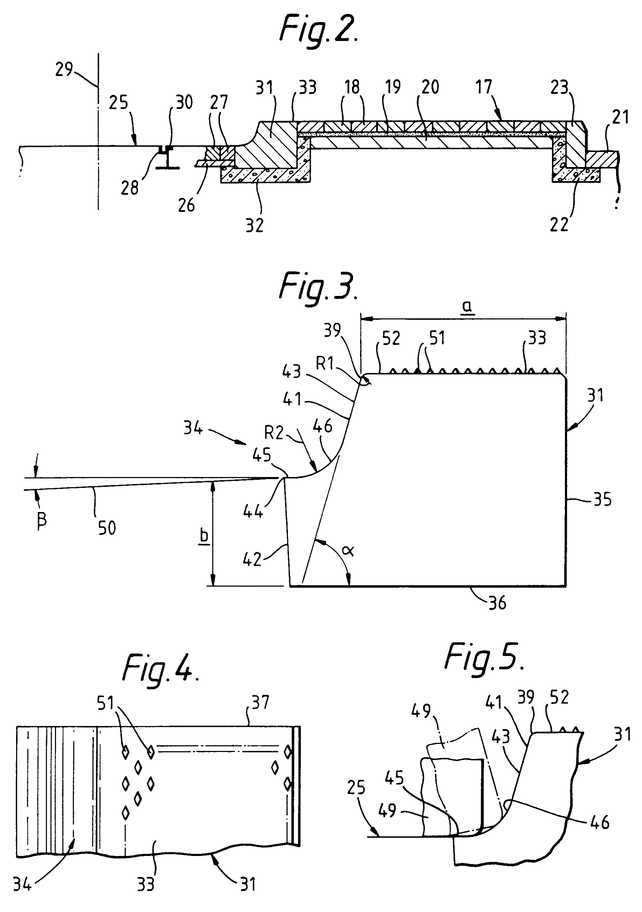

Der in Fig. 2 dargestellte Querschnitt zeigt eine Haltestelle 17, deren Oberfläche durch eine Vielzahl von Betonplatten 18 od. dgl. gebildet ist, die in üblicher Weise auf einer Sandschicht 19 od. dgl. verlegt sind, unter der sich eine Frostschutzschicht 20 aus Kies od. dgl. befinden kann. An der in Fig. 2 rechten Seite schließt sich an die Haltestelle 17 eine vorhandene Straße 21 od. dgl. an, die durch übliche, z.B. in einer Magerbetonschicht 22 verlegte Bordsteine 23 abgegrenzt ist.

Auf der in Fig. 2 linken Seite befindet sich eine nur schematisch angedeutete Fahrbahn 25, die z.B. aus in einem üblichen Pflasterbett 26 verlegten Pflastersteinen 27 gebildet ist. Die beiden Schienen 28 eines symmetrisch zu einer Symmetrieebene 29 verlegten Gleises für eine Straßenbahn od. dgl. sind vollkommen in die Fahrbahn 25 eingelassen, und ihre Oberkanten 30, nachfolgend kurz SO bezeichnet, bilden die Referenzhöhe für nachfolgend erläuterte Höhenangaben.

Die seitliche Begrenzung der Fahrbahn 25 zur Haltestelle 17 hin wird nicht mit herkömmlichen Bordsteinen (23 in Fig. 2), sondern mit erfindungsgemäßen Bordsteinen 31 vorgenommen, die z.B. in einer an das Pflasterbett 26 grenzenden Magerbetonschicht 32 eingebettet sind.

Die insbesondere aus Fig. 3 und 4 ersichtlichen Bordsteine 31 bestehen wie die herkömmlichen Bordsteine 23 zweckmäßig aus quaderförmigen Beton-Fertigbauteilen, obwohl sie auch aus Natur- oder Kunststein hergestellt sein könnten, und weisen eine als Auftrittsfläche dienende Oberseite 33, eine als Begrenzung wirksame Vorderseite 34, eine Rückseite 35, eine Unterseite 36 und zwei Stirnseiten 37 auf, wobei die Rückseiten 35 und die Unterseiten 36 weitgehend zur Abstützung im Magerbetonbett 32 bestimmt sind. Dabei schließt die Oberseite 33, wie Fig. 2 zeigt, im eingebauten Zustand der Bordsteine 31 im wesentlichen bündig mit der Oberseite der Haltestelle 17 ab.

Die Oberseite 33 geht an ihrem Vorderende über einen konvexen, gleichzeitig die Haltestellenoberkante definierenden Bogenabschnitt 39, der einen kleinen Krümmungsradius R1 von z.B. 15 mm aufweist und dazu dient scharfe Kanten zu vermeiden, die leicht ausbrechen könnten, in die Vorderseite 34 über. Diese weist ein oberes, frei liegendes Teil 41 und ein unteres, in die Magerbetonschicht 32 eingebettetes Teil 42 auf. Das frei liegende Teil 41 enthält einen an den Bogenabschnitt 39 grenzenden, vorzugsweise im wesentlichen ebenen Abschnitt 43, der mit der im wesentlichen ebenen Unterseite 36 einen Winkel α von vorzugsweise 65° bis 85° einschließt einen schmalen, an die Oberkante 44 des unteren Teils 42 grenzenden, im wesentlichen ebenen Abschnitt 45, der mit der Unterseite 36 einen sehr kleinen Winkel β von nur wenigen Grad bildet und einen die beiden Abschnitte 43,45 verbindenden, gewölbten Abschnitt 46 auf, der sich über einen Bogen von vorzugsweise 65° bis 85° erstreckt. Dabei handelt es sich vorzugsweise um einen Kreisbogen mit einem Radius R2 von 75 mm, um dadurch den gewölbten Abschnitt 46 an die Außenkonturen herkömmlicher Omnibusreifen anzupassen.

Die drei Abschnitte 43,45 und 46 dienen dazu, das wirksame, frei liegende Teil 41 der Vorderseite 34 als eine von unten nach oben und in bezug auf den Bordstein 31 von außen nach innen hin zurückweichende Schrägfläche auszubilden, die zur Spurführung von sich der Haltestellenoberkante (Bogenabschnitt 39) nähernden Omnibussen beiträgt. Diese Wirkung ergibt sich dadurch, daß auf ein lenkbares Rad 49, das in Fig. 5 schematisch in zwei verschiedenen Stellungen angedeutet ist, zwangsläufig ein Gegensteuermoment ausgeübt wird, sobald es vom nahezu ebenen Abschnitt 45 auf den vergleichsweise stark gewölbten Abschnitt 46 oder gar den vergleichsweise steil ansteigenden Abschnitt 43 überzuwechseln beginnt. Dieses Gegensteuermoment überträgt sich über das Lenkrad auf den Fahrer, so daß dieser entsprechend reagieren und das Rad 49 im Bereich des gewölbten Abschnitts 46 oder zumindest in unmittelbarer Nähe davon halten kann.

Da im übrigen bekannt ist, welchen seitlichen Abstand die Außenkante des Rades 49 von der Haltestellenoberkante haben muß, damit sich beim Öden und Schließen der Türen des Omnibusses der gewünschte kleine Ein- und Ausstiegsspalt zwischen dessen Türschwellen und dem Bogenabschnitt 39 ergibt (natürlich unter Einberechnung eines ausreichend großen Toleranzbereichs), können die Dimensionen des Bordsteins 31 und insbesondere die seiner Abschnitte 43,45 und 46 leicht so festgelegt werden, daß sich die gewünschte Wirkung ergibt.

Im übrigen zeigt Fig. 5, daß sich beim Bemühen des Fahrers, die Räder 39 möglichst im Bereich der Abschnitte 45,46 zu halten, keine schädlichen Reibungskräfte auf die Reifenflanken ausgeübt werden. Im Bereich der Abschnitte 45,46 rollen die Räder 49 vielmehr im wesentlichen noch in natürlicher Weise ab, insbesondere wenn der Abschnitt 46 nicht wesentlich stärker gewölbt ist, als den üblichen Reifenabmessungen für Omnibusse im Übergangsbereich zwischen den Laufflächen und den Reifenflanken entspricht. Selbst wenn die Räder 49 vorübergehend auf den Abschnitt 43 auflaufen, ergibt sich allenfalls eine weitgehend unschädliche Linienberührung zwischen den Reifenflanken und dem Bordstein 31.

Die erfindungsgemäße Haltestelle 17 soll insbesondere an bekannte Niederflur-Straßenbahnen angepaßt sein, bei denen das Maß zwischen SO und der Ein- bzw. Austrittsstufe in Abhängigkeit vom Verschleiß der Schienen und Laufräder sowie vom momentanen Belastungsgrad z.B. zwischen 240 und 300 mm schwanken kann. Um dabei unabhängig vom Einzelfall zu erwünschten minimalen Einstiegshöhen von in der Regel ca. 40 mm bis 50 mm zu kommen, damit der Spalt zwischen Fahrzeug und Haltestelle bemerkt wird und z.B. Kleinkinder nicht mit den Füßen eingeklemmt werden, wird im Hinblick auf das eingangs erwähnte System vorgeschlagen, die Regelhöhe (= Abstand Haltestellenoberkante von SO) auf 180 mm festzulegen Dadurch ergeben sich reale Einstiegshöhen von ca. 60 mm bis 120 mm, wobei selbst die selten auftretenden maximalen Ein- bzw. Ausstiegshöhen von 120 mm (keinerlei Verschleiß, geringste Belastung) u.a. von Rollstuhlfahrern noch gut überwunden werden können Bei den geplanten Niederflur-Omnibussen wird der Abstand zwischen der Fahrbahn (Rollfläche der Räder) und der Ein- bzw. Austrittsstufe dagegen voraussichtlich ca. 320 mm betragen, wobei mittels einer Niveauregelung dafür gesorgt werden kann, daß dieses Maß beim Anhalten an einer Haltestelle auf einen von der Belastung unabhängigen Wert von z.B. 220 mm fest eingestellt wird. Für diesen Fall kann mit dem erfindungsgemäßen Bordstein die Regelhöhe auf ca. 55 mm eingestellt werden, indem der Abstand zwischen der Oberseite 33 und der auf dem Niveau der Fahrbahn 25 liegenden Kante 44 auf 165 mm festgelegt wird, was zu einer Ein- bzw. Ausstiegshöhe von ca. 55 mm führt, die weitgehend unabhängig vom Verschleiß und von der Belastung ist. Werden die Haltestellen dagegen mit heute allgemein üblichen Standardlinien- oder Standardschubgelenklinienbussen angefahren, dann ergeben sich reale Einstiegshöhen von maximal z.B. ca. 155 mm bis zur jeweils ersten Trittstufe, wenn vorausgesetzt wird, daß leere und mit neuen Reifen versehene Omnibusse dieser Art einen Abstand zwischen der Fahrbahn und der Ein- bzw. Ausstiegsstufe von ca. 320 mm besitzen. Um gleichzeitig eine Regelhöhe von 165 mm für die Busse und von 180 mm für die Bahnen innerhalb derselben Haltestelle zu ermöglichen, wird die Fahrbahn 25 von den Bordsteinen 31 in Richtung der Schienen 28 leicht abfallen gelassen. Dies ist in Fig. 3 durch den Winkel β und eine Linie 50 dargestellt, die eine derart abfallende Fahrbahn 25 andeuten soll, daß die Oberkante 44 des unteren Teils 41 des Bordsteins 31 in dessen eingebautem Zustand um ein gewünschtes Maß von z.B. 15 mm oberhalb von SO liegt. Dadurch steht der Omnibus im Vergleich zur Oberseite der Haltestelle 17 ebenfalls um ca. 15 mm höher, so daß sich im beispielshaften Fall die genannten Einstiegshöhen ergeben, was im Vergleich zu üblichen, fahrbahngleichen Haltestellen eine erhebliche Verbesserung mit sich bringt. Um dabei dennoch eine weitgehend ebene Fahrbahn 25 zu erhalten, laufen die Abschnitte 45 der Bordsteine 31 im eingebauten Zustand entsprechend Fig. 2 unter einem ebensolchen Winkel β aus.

Die Ausbildung der unteren Teile 42 der Vorderseiten 34 der Bordsteine 31 ist weitgehend unbedeutend. Wie Fig. 3 zeigt, kann jedoch das Teil 42 von seiner Oberkante 44 bis zu seiner Unterkante leicht schräg nach innen (oder außen) verlaufen, wobei die Neigung dem Winkel β entspricht. Dadurch wird im Ausführungsbeispiel der Einbau der Pflastersteine 27 erleichtert, die mit einer entsprechenden Schräglage eingebaut werden müssen.

Die Oberseiten 33 der Bordsteine 31 sind vorzugsweise mit der Rutschfestigkeit dienenden, rautenförmigen Erhebungen oder Vorsprüngen 51 von z.B. 5 mm Höhe versehen Diese sind vorzugsweise so ausgebildet, daß sie von Blinden mit ihrem Stock ertastet und zur Bestimmung ihres Standorts auf der Haltestelle 17 verwendet werden können. Dabei ist ein unmittelbar an den bogenförmigen Abschnitt 39 jedes Bordsteins 31 grenzender, z.B. 5 cm breiter Streifen 52 vorzugsweise frei von den genannten Erhebungen. Auch diese Maßnahme dient dem Zweck der Ertastung mit einem Blindenstock. Hierdurch wird der sonst bestehende Nachteil vermieden, daß sich der Blinde bei der Ermittlung der Haltestellenoberkante mit seinem Stock erst über den bogenförmigen Abschnitt 39 hinaus vortasten müßte, was die Gefahr des Haltverlierens in sich birgt und zu schweren Unfällen führen könnte. Diese zusätzlichen Markierungen werden natürlich zweckmäßig in Verbindung mit den anhand Fig. 1 beschriebenen Markierungen angewendet.

Ein für die Zwecke der Erfindung besonders gut geeigneter Bordstein 31 besitzt bei einer Länge von ca. 100 cm und einer Breite des Teils 42 (das auch ganz oder teilweise fehlen könnte) von ca 41,5 cm eine Höhe (Abstand der Oberseite 33 von der Unterseite 36) von ca. 33,5 cm, wobei der Abstand der Kante 44 von der Oberfläche 33 165 mm und die Breite der Oberfläche 33 ca. 306 mm beträgt.

Versuche mit dem beschriebenen Bordstein 31 haben überraschend ergeben, daß sie die gewünschte Spurführung einwandfrei ermöglichen, keinen nennenswerten zusätzlichen Abrieb der Reifen der Omnibusse zur Folge haben und für die Fahrer beim Herstellen des gewünschten geringen Ein- und Ausstiegsspalts eine wirksame Hilfe darstellen.

Die Erfindung ist nicht auf die beschriebenen Ausführungsbeispiele beschränkt, die sich auf vielfache Weise abwandeln lassen. Beispielsweise ist es möglich, der Oberfläche der Haltestelle 17 nach der einen oder anderen Seite ein geringfügiges, dem Ablauf von Regenwasser dienendes Gefälle zu geben, wie in Fig. 2 von links nach rechts angedeutet ist. Ferner ist es möglich, aus demselben Grund auch der Oberseite des Bordsteins 31 ein kleines Gefälle zu geben. Dies ist insbesondere aus Fig. 3 ersichtlich, wonach der Abstand der Oberseite 33 von der Unterseite 36, die beim Einbau horizontal angeordnet wird, von rechts nach links geringfügig kleiner wird. Weiterhin kann der erfindungsgemäße Bordstein 31 natürlich auch bei nur dem Bahn- oder Busverkehr dienenden Haltestellen angewendet werden, auch wenn es sich nicht um Niederflur-Omnibusse handelt, da die Vorteile der Möglichkeit des nahen Heranfahrens an die Bordsteine an sich unabhängig vom speziellen Omnibustyp ist. Ferner ist zu bedenken, daß bei einer üblichen Spurweite der Straßenbahnen von 1435 mm eine eingleisige Haltestelle symmetrisch zur Mittelachse des Gleises ausgebildet wird, d.h. die Fahrbahn zu beiden Seiten des Gleises um das erwähnte Maß von 15 mm ansteigen kann. In diesem Fall würden die Busse mit beiden Rädern auf derselben Höhe angeordnet sein, wobei vorteilhafterweise der Abstand der gegenüberliegenden Bordsteine mit z.B. 2460 mm so gewählt wird, daß Busse mit einer üblichen Breite von z.B. 2430 mm in beiden Fahrtrichtungen an die Haltestelle heranfahren können und dennoch die Räder stets im wesentlichen auf gleichem Niveau angeordnet sind. Um bei zweigleisigen Haltestellen zu vermeiden, daß die vom Bordstein fernen Räder um die genannten ca. 15 mm tiefer stehen, wird vorgeschlagen, die Fahrbahn von der jeweils bordsteinfernen Schiene an, d.h. im Bereich zwischen den beiden Gleisen, wieder um das Maß von 15 mm ansteigen zu lassen, damit auch bei in solche doppelgleisige Haltestellen einfahrenden Bussen jeweils sowohl die innen als auch die außen liegenden Räder auf demselben Niveau angeordnet werden können. Schließlich versteht sich, daß alle genannten Maße ohne weiteres an die im Einzelfall vorliegenden Verhältnisse und insbesondere die jeweiligen Maße der Busse und Bahnen angepaßt werden können und daß der erläuterte Niveauausgleich auch in der Weise stattfinden könnte, daß die Fahrbahn von den Bordsteinkanten in Richtung der Gleise leicht ansteigt.

## Patentansprüche

1. Haltestelle für Omnibus-Verkehr, insbesondere für kombinierten Bahn/Bus-Verkehr, mit einer Oberfläche (7) und einer Fahrbahn (25), wobei die Begrenzung der Oberfläche (7) zu der Fahrbahn (25) durch einen quaderförmigen Bordstein (8,31) gebildet ist, der eine als Auftrittsfläche dienende Oberseite (33), eine Rückseite (35), eine Unterseite (36) und eine als Begrenzungsfläche dienende, der Fahrbahn (25) zugewandte und mit einer von unten nach oben zurückweichenden Schrägfläche versehene Vorderseite (34) aufweist, dadurch gekennzeichnet, daß die Schrägfläche als eine zur Spurführung der Omnibusse bestimmte Schrägfläche ausgebildet ist und in ihrem unteren Teil in einen konkav gewölbten Abschnitt (46) übergeht, der an einer auf dem Niveau der Fahrbahn (25) liegenden Kante (44) endet.

2. Haltestelle nach Anspruch 1, dadurch gekennzeichnet, daß der gewölbte Abschnitt (46) einen Radius (R2) von 60 bis 90 mm aufweist.

3. Haltestelle nach Anspruch 1 oder 2, dadurch gekennzeichnet, daß sich der konkav gewölbte Abschnitt (46) über einen Bogen von 60 bis 85° erstreckt.

4. Haltestelle nach einem der Ansprüche 1 bis 3, dadurch gekennzeichnet, daß der gewölbte Abschnitt (46) an seinem oberen Ende in einen im wesentlichen ebenen Abschnitt (43) übergeht, der einen Winkel von 65 bis 85° mit der ebenfalls im wesentlichen ebenen Unterseite (36) einschließt.

5. Haltestelle nach einem der Ansprüche 1 bis 4, dadurch gekennzeichnet, daß der gewölbte Abschnitt (46) an seinem unteren Ende in einen im wesentlichen horizontalen, eben ausgebildeten Abschnitt (45) übergeht.

6. Haltestelle nach Anspruch 5, dadurch gekennzeichnet, daß der ebene Abschnitt (45) einen kleinen Winkel (β) mit der horizontalen Unterseite (36) bildet.

7. Haltestelle nach einem der Ansprüche 1 bis 6, dadurch gekennzeichnet, daß die Oberseite (33) im wesentlichen eben ausgebildet ist und mit der Horizontalen einen kleinen, dem Wasserablauf dienenden Winkel einschließt.

8. Haltestelle nach einem der Ansprüche 1 bis 7, dadurch gekennzeichnet, daß die Oberseite (33) mit ertastbaren Markierungen (51) versehen ist.

9. Haltestelle nach einem der Ansprüche 1 bis 8, dadurch gekennzeichnet, daß die Oberseite (33) zumindest in einem an die Schrägfläche grenzenden Streifen (52) glatt ausgebildet ist.

10. Haltestelle nach einem der Ansprüche 1 bis 9, dadurch gekennzeichnet, daß die Vorderseite (34) ein unteres, zum Einbau des Bordsteins (31) bestimmtes Teil (42) aufweist, das mit der Unterseite (36) einen an die Neigung der Fahrbahn (25) angepaßten Winkel bildet.

11. Haltestelle nach einem der Ansprüche 1 bis 10, dadurch gekennzeichnet, daß der Abstand der Außenkante (44) des Abschnitts (45) von der Oberseite (33) 165 mm beträgt.

12. Haltestelle nach einem der Ansprüche 1 bis 11, dadurch gekennzeichnet, daß ihre Oberfläche (7) in vorgewählten Abständen aus unmittelbar hinter den Bordsteinen (8) angeordneten Platten oder Steinen (11) gebildet ist, in deren Oberflächen ertastbare Markierungen eingearbeitet sind, und daß die vorgewählten Abstände den Abständen ausgewählter Türen (10) der Bahnen (4) und/oder Omnibusse (6) von ihrem Vorderende entsprechen.

13. Haltestelle nach Anspruch 12, dadurch gekennzeichnet, daß die Markierungen aus einer Riffelung od. dgl. bestehen.

14. Haltestelle nach einem der Ansprüche 1 bis 13, dadurch gekennzeichnet, daß sie mit einer Haltemarkierung (9) für die Bahnen (4) und/oder Omnibusse (6) versehen ist.

15. Haltestelle nach einem der Ansprüche 1 bis 14, dadurch gekennzeichnet, daß die unterhalb der Wölbungen (46) befindlichen Abschnitte (45) der Bordsteine (31) durch abfallend oder ansteigend ausgebildete Fahrbahnabschnitte mit den Schienen-Oberkanten (30) verbunden sind.

16. Bordstein, bestehend aus einem quaderförmigen Fertigbauteil, das eine als Auftrittsfläche dienende Oberseite (33), eine als Begrenzung wirksame Vorderseite (34), eine Rückseite (35) und eine Unterseite (36) aufweist, wobei die Vorderseite (34) einen unteren Einbauabschnitt (42) mit einer Oberkante (44) und ein daran anschließendes oberes Teil (41) aufweist, das mit einer von unten nach oben zurückweichenden Schrägfläche versehen ist, die in ihrem unteren Bereich in einen konkav gewölbten Abschnitt (46) übergeht, dadurch gekennzeichnet, daß der konkav gewölbte Abschnitt (46) in einen im wesentlichen ebenen im Einbauzustand nahezu horizontal verlaufenden, in die angrenzende Fahrbahn übergehenden Abschnitt (45) übergeht und die Schrägfläche eine zur Spurführung von Omnibussen in Haltestellen mit Omnibus-Verkehr, insbesondere mit kombiniertem Bahn/Bus-Verkehr, bestimmte Ausbildung besitzt.

17. Anwendung eines Bordsteins nach Anspruch 16, zur seitlichen Begrenzung der Fahrbahnen (25) von Haltestellen mit Omnibus-Verkehr, insbesondere mit kombiniertem Bahn/Bus-Verkehr, zwecks Spurführung der Omnibusse beim Heranfahren an die Haltestelle.

## Claims

1. Stop for bus traffic, in particular for combined tram and bus traffic, with a surface (7) and a roadway (25), wherein the boundary between the surface (7) and the roadway (25) is formed by a kerbstone (8, 31) in the shape of a parallelepiped, which has an upper side (33) acting as a walking surface, a rear (35), an underside (36) and a front (34), which acts as the boundary surface, faces the roadway (25) and has a surface sloping backwards and upwards, characterised in that the sloping surface is a sloping surface constructed for lane guidance of the buses, and in its lower portion merges into a concave arched section (46) terminating at an edge (44) located on the level of the roadway (25).

2. Stop according to Claim 1, characterised in that the arched section (46) has a radius (R2) of 60 to 90 mm.

3. Stop according to Claim 1 or 2, characterised in that the concave arched section (46) extends over a 60° to 85° arc.

4. Stop according to one of Claims 1 to 3, characterised in that the arched section (46) merges at its upper end into an essentially plane section (43), which forms an angle of 65° to 85° with the similarly essentially plane underside (36).

5. Stop according to one of Claims 1 to 4, characterised in that the arched section (46) merges at its lower end into an essentially horizontal plane section (45).

6. Stop according to Claim 5, characterised in that the plane section (45) forms a small angle (β) with the horizontal underside (36).

7. Stop according to one of Claims 1 to 6, characterised in that the upper side (33) is essentially plane and is at a small angle from the horizontal to facilitate water drainage.

8. Stop according to one of Claims 1 to 7, characterised in that the upper side (33) is provided with markings (51) discernible by touch.

9. Stop according to one of Claims 1 to 8, characterised in that the upper side (33) is smooth at least in a strip area (52) adjoining the sloping surface.

10. Stop according to one of Claims 1 to 9, characterised in that the front (34) has a lower portion (42), which is constructed for installation of the kerbstone (31) and forms an angle corresponding to the slope of the roadway (25) with the underside (36).

11. Stop according to one of Claims 1 to 10, characterised in that the distance between the outside edge (44) of section (45) of the upper side (33) is 165 mm.

12. Stop according to one of Claims 1 to 11, characterised in that at preselected intervals, its surface (7) is composed of slabs or stones (11) located directly behind the kerbstones (8), the surfaces of said slabs or stones having markings discernible by touch; and that the preselected intervals correspond to the distances of the tram and/or bus doors (10) from the front end of said trams (4) and/or buses (6).

13. Stop according to Claim 12, characterised in that the markings are formed by corrugations or similar.

14. Stop according to one of Claims 1 to 13, characterised in that it is provided with stop marking (9) for the trams (4) and/or buses (6).

15. Stop according to one of Claims 1 to 14, characterised in that the sections (45) of the kerbstones (31) located underneath the arches (46) are connected to the upper edges of the rails (30) by roadway sections constructed on a downward or upward slope.

16. Kerbstone comprising a parallelepipedal finished construction part, which has a surface (33) acting as walking surface, a front (34) acting as a boundary, a rear (35) and an underside (36), wherein the front (34) has a lower installation section (42) with an upper edge (44) and an upper portion (41) adjoining thereto, which has a surface sloping backwards and upwards, which merges in its lower region into a concave arched section (46), characterised in that the concave arched section (46) merges into a section (45), which is essentially plane, extends approximately horizontally when installed and merges into the adjoining roadway, and the structure of the sloping surface assures lane guidance of the buses at stops for bus traffic, in particular for combined tram/bus traffic.

17. Application of a kerbstone according to Claim 16 as a lateral boundary for roadways (25) at stops for bus traffic, in particular for combined tram/bus traffic, for the purpose of lane guidance of the buses when approaching the bus stop.

## Revendications

1. Arrêt pour la circulation d'autobus, pour la circulation combinée de tramways/autobus, notamment, avec une surface (7) et une chaussée (25), la délimitation de la surface (7) par rapport à la chaussée (25) étant formée par une bordure (8, 31) parallélépipédique, qui présente un côté supérieur (33) servant d'aire de sortie, un côté arrière (35), un côté inférieur (36), et un côté avant (34) servant de surface de délimitation, tournée vers la chaussée (25), et munie d'une surface oblique en recul du bas vers le haut, caractérisé en ce que la surface oblique est réalisée sous forme de surface destinée au guidage des autobus, et se prolonge dans sa partie inférieure par une section (46) de courbure concave, qui s'achève sur un bord (44) situé au niveau de la chaussée (25).

2. Arrêt suivant la revendication 1, caractérisé en ce que la section courbée (46) présente un rayon (R2) de 60 à 90 mm.

3. Arrêt suivant l'une des revendications 1 ou 2, caractérisé en ce que la section (46) de courbure concave s'étend sur un arc de 60 à 85°.

4. Arrêt suivant l'une quelconque des revendications 1 à 3, caractérisé en ce que la section courbée (46) se prolonge sur son extrémité supérieure par une section (43) essentiellement plane, qui forme un angle de 65 à 85° avec le côté inférieur (36), également essentiellement plan.

5. Arrêt suivant l'une quelconque des revendications 1 à 4, caractérisé en ce que la section courbée (46) se prolonge sur son extrémité inférieure par une section (45) plane, essentiellement horizontale.

6. Arrêt suivant la revendication 5, caractérisé en ce que la section plane (45) forme un angle (bêta) avec le côté inférieur horizontal (36).

7. Arrêt suivant l'une quelconque des revendications 1 à 6, caractérisé en ce que le côté supérieur (33) a une réalisation essentiellement plane, et forme un angle réduit avec l'horizontale, servant à l'écoulement des eaux.

8. Arrêt suivant l'une quelconque des revendications 1 à 7, caractérisé en ce que le côté supérieur (33) est muni de marquages (51) détectables.

9. Arrêt suivant l'une quelconque des revendications 1 à 8, caractérisé en ce que le côté supérieur (33) a une réalisation lisse, dans la zone d'une bande (52) limitrophe à la surface oblique, du moins.

10. Arrêt suivant l'une quelconque des revendications 1 à 9, caractérisé en ce que le côté avant (34) présente une partie inférieure (42) destinée à l'encastrement de la bordure (31) et qui forme, avec le côté inférieur (36), un angle adapté à l'inclinaison de la chaussée (25).

11. Arrêt suivant l'une quelconque des revendications 1 à 10, caractérisé en ce que la distance entre le bord externe (44) de la section (45) et le côté supérieur (33) est de 165 mm.

12. Arrêt suivant l'une quelconque des revendications 1 à 11, caractérisé en ce que sa surface supérieure (7) est formée à intervalles prédéfinis de dalles ou de pavés (11), disposés immédiatement en arrière de la bordure (8), et dans les surfaces desquels sont pratiqués des marquages détectables, et en ce que les intervalles prédéfinis correspondent aux distances sélectionnées de portes (10) des tramways (4) et/ou autobus (6), par rapport à leur extrémité avant.

13. Arrêt suivant la revendication 12, caractérisé en ce que les marquages se composent d'un rainurage, ou autres.

14. Arrêt suivant l'une quelconque des revendications 1 à 13, caractérisé en ce qu'il est muni d'un marquage d'arrêt (9) pour les tramways (4) et/ou les autobus (6).

15. Arrêt suivant l'une quelconque des revendications 1 à 14, caractérisé en ce que les sections (45) des bordures (31), situées au-dessous des courbures (46), sont reliées aux bords supérieurs (30) des rails par des sections de chaussée descendantes ou ascendantes.

16. Bordure, composée d'une élément préfabriqué parallélépipédique, qui présente un côté supérieur (3) servant d'aire de sortie, un côté avant (34) faisant office de délimitation, un côté arrière (35) et un côté inférieur (36), le côté avant (34) présentant une section encastrée inférieure (42) avec un bord supérieur (44), prolongé par une partie supérieure (41) munie d'une surface oblique en recul du bas vers le haut, qui se prolonge dans sa zone inférieure par une section (46) de courbure concave, caractérisée en ce que la section de courbure concave (46) se prolonge par une section (45) essentiellement plane, pratiquement horizontale à l'état d'encastrement et se prolongeant par la chaussée limitrophe, et en ce que la surface oblique a une réalisation destinée au guidage d'autobus aux arrêts de circulation, de circulation combinée de tramways/autobus, notamment.

17. Utilisation d'une bordure suivant la revendication 16 pour la délimitation latérale entre des chaussées (25) et des arrêts de circulation d'autobus, de circulation combinée de tramways/autobus, notamment, en vue du guidage des autobus lors de leur approche de l'arrêt.
